# EUROPÄISCHE PATENTSCHRIFT

(11) **EP 3 771 058 B1**
(45) Veröffentlichungstag und Bekanntmachung des Hinweises auf die Patenterteilung: **23.08.2023**
(21) Anmeldenummer: 19188277.8
(22) Anmeldetag: 25.07.2019
(51) Int. Cl.: H02H 7/26, H02H 1/00

(54) **DIFFERENTIALSCHUTZ FÜR EIN ELEKTRISCHES NETZWERK**
DIFFERENTIAL PROTECTION FOR AN ELECTRIC NETWORK
PROTECTION DIFFÉRENTIELLE POUR UN RÉSEAU ÉLECTRIQUE

(43) Veröffentlichungstag der Anmeldung: 27.01.2021
(73) Patentinhaber: Siemens Aktiengesellschaft, 80333 München (DE)
(72) Erfinder: Jahr, Andreas, 91056 Erlangen (DE)
(74) Vertreter: Siemens Patent Attorneys

(56) Entgegenhaltungen:
- EP-A1- 1 780 858
- EP-A1- 2 618 502
- CN-A- 106 711 963
- US-A- 5 995 911

## Beschreibung

### Gebiet der Erfindung

Die vorliegende Erfindung betrifft ein Verfahren eines Überwachens eines elektrischen Netzwerkes zum Differentialschutz und betrifft ferner ein System zum Überwachen eines elektrischen Netzwerkes zum Differentialschutz.

### Stand der Technik

Herkömmlicherweise wird ein elektrisches Netzwerk durch Aufnehmen und Auswerten von Messwerten an verschiedenen Punkten des elektrischen Netzwerkes überwacht, um Fehler oder Probleme bei Komponenten, Geräten oder Leitungen identifizieren zu können. Schutzobjekte in einem elektrischen Netzwerk können z.B. Leitungen, Transformatoren, oder allgemein Geräte umfassen. Der Differentialschutz kann die Stromsumme an einem Punkt oder mehreren Punkten nach dem Kirchhoffschen Knotenpunktsatz betrachten. Alle in das Schutzobjekt ein- oder ausschließenden Ströme werden gemessen und aufsummiert. Hieraus kann der Differentialstrom für das Schutzobjekt gebildet werden. Ist der Differentialstrom ungleich null, kann ein Fehler angezeigt werden und entsprechende Schutzvorrichtungen können das Schutzobjekt z.B. von dem Rest des elektrischen Netzwerkes elektrisch entkoppeln.

Differentialschutz erfordert eine Zuordnung von Messwerten, die an verschiedenen Stellen des Netzwerkes aufgenommen wurden zu entsprechenden Messzeitpunkten. Bisher wurde eine Synchronisierung der Geräte über GPS oder Telegramm-Synchronisierung durchgeführt. Bei der Telegramm-Synchronisierung verwendet jedes der Geräte eine lokale individuelle Uhr. Ein Telegramm, welches mehrere Messwerte enthalten kann, welche zu verschiedenen Zeitpunkten aufgenommen worden sind, wird mit einem Zeitstempel versehen, welcher von der lokalen Uhr abgeleitet ist. Das empfangende Gerät misst den Zeitpunkt des Empfangs des Telegramms basierend auf seiner lokalen Uhr und muss einen komplexen Algorithmus anwenden, um die Messwerte des sendenden Gerätes auf eigene Messwerte hinsichtlich einer identischen Zeit zu beziehen. Auch die GPS-gestützte Synchronisierung weist Probleme hinsichtlich der Variabilität von Laufzeiten zwischen Satelliten und beteiligten Geräten auf.

Differentialschutzverfahren mit Zeitsynchronisierung sind aus EP 1 780 858, EP 2 618 502 und US 5 995 911 bekannt.

Somit ist es eine Aufgabe der vorliegenden Erfindung, ein Verfahren eines Überwachens eines elektrischen Netzwerkes bzw. eine Vorrichtung zum Überwachen eines elektrischen Netzwerkes zum Differentialschutz vorzuschlagen, wobei ein verbesserter Differentialschutz gewährleistet werden kann und in einfacher Weise realisiert oder implementiert werden kann. Die Aufgabe wird durch die Gegenstände der unabhängigen Ansprüche gelöst. Die abhängigen Ansprüche spezifizieren besondere Ausführungsformen der vorliegenden Erfindung.

### Zusammenfassung der Erfindung

Ausführungsformen der vorliegenden Erfindung stellen einen Differentialschutz auf Basis von Messwerten mit hochgenauer Zeitsynchronisierung bzw. Zeitstempelung der Messwerte bereit. Durch die Zeitstempelung wird die Differentialschutz-Synchronisierung deutlich vereinfacht und eine Basis für die Kommunikation über nicht deterministische Kommunikationsnetzwerke wird gestellt.

Gemäß der vorliegenden Erfindung ist ein Verfahren eines Überwachens eines elektrischen Netzwerkes, insbesondere Mittel- oder Hochspannungsnetzwerk, zum Differentialschutz bereitgestellt, wobei das Verfahren aufweist: Messen, zu einem gemäß einer Masteruhr bestimmten ersten Zeitpunkt, eines ersten Stromwertes mittels eines ersten Gerätes an einer ersten Stelle im Netzwerk und Zuordnen des ersten Zeitpunkts (z.B. als Zeitstempel); Erhalten, bei einem zweiten Gerät, des ersten Stromwertes und des zugeordneten ersten Zeitpunktes; Vergleichen des ersten Stromwertes mit einem zweiten Stromwert, der an einer zweiten Stelle im Netzwerk gemessen wurde und dem ersten Zeitpunkt gemäß der Masteruhr zugordnet ist.

Unmittelbar beteiligt an dem Verfahren können zumindest das erste Gerät und das zweite Gerät sein. Weiter kann von Zeit zu Zeit die Masteruhr mit dem ersten Gerät und dem zweiten Gerät zur wiederholten Synchronisierung kommunizieren bzw. verbunden sein. Das erste Gerät und das zweite Gerät können auf eine Zeit gemäß der Masteruhr synchronisiert worden sein, um somit sämtliche Messwerte auf die Masteruhr hinsichtlich der jeweiligen Messzeitpunkte beziehen zu können.

Der erste (elektrische) Stromwert wird an einer ersten Stelle im Netzwerk gemessen, wenn die Masteruhr den ersten Zeitpunkt anzeigt. Der erste Stromwert kann z.B. als ein Analogstromwert erfasst werden und nachfolgend in einen digitalen Wert verwandelt werden mittels Abtastens des Analogwertes genau zu dem ersten Zeitpunkt. Das erste Gerät kann weitere erste Stromwerte erfassen und diese zusammen mit den zugeordneten Messzeitpunkten speichern.

Der erste Stromwert zusammen mit dem zugeordneten ersten Zeitpunkt kann dann von dem ersten Gerät zu dem zweiten Gerät übermittelt werden, insbesondere über ein Kommunikationsnetzwerk, über das das erste Gerät mit dem zweiten Gerät verbunden ist, insbesondere kabelgebundenes Kommunikationsnetzwerk.

Das Vergleichen des ersten Stromwerkes mit dem zweiten Stromwerk kann bei dem zweiten Gerät oder auch bei einem anderen Gerät erfolgen. Die zweite Stelle im Netzwerk ist verschieden von der ersten Stelle im Netzwerk und kann z.B. von der ersten Stelle zwischen 1 km und 500 km entfernt sein.

Gemäß einer Ausführungsform der vorliegenden Erfindung ist der zweite Stromwert exakt dem ersten Zeitpunkt zugeordnet. Gemäß anderen Ausführungsformen ist der zweite Stromwert nur mit einer gewissen Unsicherheit bzw. Toleranz von z.B. zwischen 1 Nanosekunde und 500 ns dem ersten Zeitpunkt zugeordnet. Das heißt, der zweite Stromwert kann einem Zeitpunkt zugeordnet sein, welcher sich um zwischen z.B. 1 ns und 500 ns oder um zwischen 1 ns und 50 ns von dem ersten Zeitpunkt unterscheidet.

Wenn sichergestellt ist, dass sowohl der erste Stromwert als auch der zweite Stromwert dem (gleichen) ersten Zeitpunkt zugeordnet sind, so ist gewährleistet, dass der erste Stromwert und auch der zweite Stromwert exakt gleichzeitig oder zumindest im Wesentlichen gleichzeitig (mit einer gewissen Unsicherheit von einigen Nanosekunden) an den verschiedenen Stellen im Netzwerk erfasst worden ist. In diesem Fall kann das Kirchhoffsche Knotengesetz angewendet werden, um zu bestimmen, ob die in ein Schutzobjekt hineinfließenden Ströme auch aus dem Schutzobjekt vollständig herausfließen. Ist dies nicht der Fall, so kann ein Fehlerfall angezeigt werden und es können Maßnahmen ergriffen werden, um z.B. das Schutzobjekt von dem Rest des elektrischen Netzwerkes abzutrennen.

Dadurch, dass sowohl das erste Gerät als auch das zweite Gerät jeden Zeitpunkt gemäß der Masteruhr bestimmen, kann ein Differentialschutz verbessert werden. Das erste Gerät und das zweite Geräte können in einem Kommunikationsnetzwerk mit hochgenauer Zeitsynchronisierung verbunden sein. Zum Beispiel kann die Zeitsynchronisierung durchgeführt werden, wie sie im Telekommunikationsbereich zum Einsatz kommt. Zum Beispiel kann eine Stationskommunikationstechnik (Stationsserver und - router) zur Anwendung kommen, welche z.B. eine hochgenaue Zeitsynchronisation aufweist, z.B. nach IEEE1588-Standard, SyncE oder ähnliche zeitsensitive Synchronisationsverfahren, da sie Kommunikationswege über zeitsensitive Netzwerke (Time Sensitive Networks oder kurz TSM) bereitstellen. Die hochgenaue Zeitsynchronisierung des Kommunikationsnetzwerkes kann z.B. auch innerhalb des elektrischen Netzwerkes verteilt sein und kann den Schutz- und Netzleitgeräten, sowie Merging Unit in ausreichender Genauigkeit zur Verfügung stehen.

Gemäß einer Ausführungsform der vorliegenden Erfindung weist das Verfahren ferner auf vorheriges Synchronisieren, insbesondere mittels Anwendens von IEEE1588 oder SyncE, des ersten und des zweiten Gerätes mittels Empfangens mindestens eines Zeitsignals von der Masteruhr, insbesondere über elektrische oder optische Kabel eines Kommunikationsnetzwerkes, wobei eine erste Laufzeit zwischen der Masteruhr und dem ersten Gerät und eine zweite Laufzeit zwischen der Masteruhr und dem zweiten Gerät berücksichtigt werden.

Durch die Synchronisierung können sowohl das erste Gerät als auch das zweite Gerät jeweils eine lokale Uhr auf die Masteruhr synchronisieren bzw. einstellen. Die erste Laufzeit kann z.B. aus derjenigen Zeit erhalten werden, welche erforderlich ist, ein Datenpaket z.B. von der Masteruhr zu dem ersten Gerät zu senden und unmittelbar darauffolgend ein anderes Datenpaket von dem ersten Gerät zu der Masteruhr zu versenden. Die erste Laufzeit als auch die zweite Laufzeit können im Verlaufe des Verfahrens fest sein, insbesondere aufgrund einer festen elektrischen Datenverbindung zwischen der Masteruhr und den jeweiligen Geräten. Bei erneutem Versenden eines weiteren Zeitsignals von der Masteruhr an das erste Gerät und/oder das zweite Gerät kann die zuvor bestimmte erste Laufzeit bzw. zweite Laufzeit berücksichtigt werden. Aus dem Stand der Technik sind Verfahren bekannt, eine Laufzeit zwischen zwei Geräten zu bestimmen.

Gemäß der Ausführungsform der vorliegenden Erfindung ist die Laufzeitbestimmung dadurch von höherer Genauigkeit, da für die Kommunikationsverbindung zwischen der Masteruhr und dem ersten Gerät immer eine selbe Datenleitung bzw. ein selber Datenweg verwendet wird. Die Zeitsynchronisation kann hochgenau sein.

Gemäß einer Ausführungsform der vorliegenden Erfindung ist das Verfahren derart ausgestaltet, dass eine Übertragung des Zeitsignals von der Masteruhr zu dem ersten Gerät über eine erste elektrische Kabelverbindung erfolgt, die die erste Laufzeit definiert, wobei eine Länge der ersten elektrischen Kabelverbindung zwischen 1 km und 5000 km beträgt, wobei eine Übertragung des Zeitsignals von der Masteruhr zu dem zweiten Gerät über eine zweite elektrische oder optische Kabelverbindung erfolgt, die die zweite Laufzeit definiert, wobei eine Länge der zweiten elektrischen oder optischen Kabelverbindung zwischen 1 km und 5000 km beträgt.

Die erste elektrische oder optische Kabelverbindung kann Kabelrouter und andere Kommunikationskomponenten umfassen, kann jedoch unverändert während des weiteren Durchführens des Verfahrens sein. Insbesondere kann immer ein gleicher fester erster Kommunikationsweg zwischen der Masteruhr und dem ersten Gerät zur Übertragung eines Zeitsignals von der Masteruhr zu dem ersten Gerät verwendet werden. Ähnliches kann für das zweite Gerät gelten.

Insbesondere wird das Zeitsignal nicht von einem GPS-Satelliten an das erste bzw. das zweite Gerät übertragen. Das Satelliten-erzeugte Zeitsignal kann eine unvorhersehbare Laufzeit zu dem ersten Gerät bzw. zweiten Gerät aufweisen, aufgrund von Instabilität der Umlaufbahn des Satelliten. Aufgrund der festen elektrischen oder optischen Kabelverbindung und des somit gebildeten fixen Übertragungsweges zwischen der Masteruhr und dem ersten Gerät kann die erste Laufzeit für jede Übertragung eines weiteren Zeitsignals exakt konstant bleiben. Damit ist eine verbesserte Synchronisierung des ersten Gerätes mit der Masteruhr und in analoger Weise auch des zweiten Gerätes mit der Masteruhr erreichbar.

Gemäß einer Ausführungsform der vorliegenden Erfindung wird das Synchronisieren wiederholt durchgeführt und/oder schließlich das Synchronisieren erfolgt mit einer Genauigkeit von 100 ns bis 1 µs. Diese hochgenaue Zeitsynchronisierung des Kommunikationsnetzwerkes und somit die hochgenaue Zeitsynchronisation der Schutzgeräte und Merging Units (allgemein des ersten Geräts und des zweiten Geräts) kann nun zur Zeitstempelung der durch Analog-Digital-Wandlung gewonnenen Messwerte (z.B. erster Stromwert, zweiter Stromwert) verwendet werden.

Gemäß einer Ausführungsform der vorliegenden Erfindung weist das Verfahren ferner auf Messen, mittels des zweiten Gerätes, bei der zweiten Stelle im Netzwerk, mehrerer zweiter Stromwerte (z.B. einschließlich des zweiten Stromwertes) zu mehreren gemäß der Masteruhr bestimmten zweiten Zeitpunkten; Speichern, zugeordnet zu den jeweiligen mehreren zweiten Zeitpunkten, der mehreren zweiten Stromwerte in einem Speicher des zweiten Gerätes.

Das zweite Gerät kann z.B. kontinuierlich und/oder zu verschiedenen Zeitpunkten mehrere zweite Stromwerte messen und/oder abtasten. Das Speichern kann in einem dafür vorgesehenen Messwertspeicher erfolgen. Auch das erste Gerät kann weitere erste Strommesswerte messen und zusammen mit den zugeordneten ersten Zeitpunkten in einem Speicher des ersten Gerätes speichern. Das erste Gerät kann ähnlich oder gleich aufgebaut sein oder konfiguriert sein, wie das zweite Gerät. Gemäß Ausführungsformen der vorliegenden Erfindung können das erste Gerät und das zweite Gerät ihre Rollen tauschen. Wenn ein Speicher mit mehreren zweiten Stromwerten und zugeordneten zweiten Zeitpunkten vorhanden ist, kann ein Differentialschutz über mehrere Zeitpunkte durchgeführt werden.

Gemäß einer Ausführungsform der vorliegenden Erfindung weist das Verfahren ferner Auffinden des zweiten Stromwertes auf, indem aus dem Speicher aus den mehreren zweiten Stromwerten derjenige herausgesucht wird, dessen zugeordneter zweiter Zeitpunkt dem ersten Zeitpunkt am nächsten liegt.

Damit kann das Verfahren wesentlich vereinfacht werden und es kann sichergestellt werden, dass jeweils an verschiedenen Stellen des Netzwerkes gemessene Stromwerte verglichen werden, welche exakt zum gleichen Zeitpunkt bzw. höchstens mit einer Zeitdifferenz von zwischen z.B. 1 ns und 50 ns gemessen wurden.

Gemäß einer Ausführungsform der vorliegenden Erfindung weist das Verfahren ferner auf Löschen des zweiten Stromwerts zugeordnet zu dem ersten Zeitpunkt aus dem Speicher des zweiten Gerätes nach dem Vergleichen des ersten Stromwertes mit einem zweiten Stromwert.

Wenn z.B. bestimmt ist, dass der zweite Stromwert und der erste Stromwert die Stromsumme null ergeben, so kann geschlossen werden, dass das Schutzobjekt keinen Fehler aufweist. Aus dem Grunde können die dem ersten Zeitpunkt zugeordneten und an den zwei verschiedenen Punkten gewonnenen Stromwerte aus dem Speicher gelöscht werden. Dadurch kann Speicher für weitere neue Strommesswerte freigegeben werden. Die Gesamtkapazität des Speichers kann somit auch begrenzt werden.

Gemäß einer Ausführungsform der vorliegenden Erfindung ist das Verfahren derart ausgebildet, dass das Messen der ersten Stromwertes und/oder des zweiten Stromwertes und/oder der mehreren zweiten Stromwerte eine A/D-Wandlung von Analog-Rohmesswerten umfasst, wobei A/D-Wandlungen bei dem ersten Gerät und dem zweiten Gerät mittels der Masteruhr synchronisiert sind.

Die Abtastungen der Analog-Roh-Messwerte können also sowohl bei dem ersten Gerät als auch bei dem zweiten Gerät zu gleichen Zeiten gemäß der Masteruhr erfolgen. Somit kann die mittels der Masteruhr bestimmte Zeit zur Zeitstempelung der durch Analog-Digital-Wandlung gewonnenen Messwerte verwendet werden. Die A/D-Wandlung für Schutzanwendungen kann z.B. im Bereich von 1 kHz bis 32 kHz liegen und kann z.B. auf die hochgenaue Zeitführung getaktet werden. Auch Anwendungen mit höheren Samplingraten, wie z.B. Power-Quality oder gar Traveling-Wave-Anwendungen mit Samplingraten von bis 1 MHz können synchronisiert getaktet, d.h. abgetastet werden. Ein Abtasten für die A/D-Wandlung bei einer Frequenz von zwischen 1 kHz und 1 MHz kann durchgeführt werden.

Gemäß der vorliegenden Erfindung weist das Erhalten, bei dem zweiten Gerät, des ersten Stromwertes und des zugeordneten ersten Zeitpunktes auf: Versenden des ersten Stromwertes und des zugeordneten ersten Zeitpunktes, insbesondere in einem Telegramm, das weitere erste Stromwerte und zugeordnete weitere erste Zeitpunkte aufweist, von dem ersten Gerät an das zweite Gerät, insbesondere über eine elektrische oder optische Kabelverbindung eines Kommunikationsnetzes zwischen dem ersten Gerät und dem zweiten Gerät. Das Kommunikationsnetzwerk kann eine hochgenaue Zeitsynchronisierung aufweisen. Regelmäßig können Telegramme von dem ersten Gerät an das zweite Gerät gesendet werden und es können Telegramme von dem zweiten Gerät zu dem ersten Gerät gesendet werden. Das erste Gerät kann auch Telegramme an ein oder mehrere weitere Geräte senden, um verschiedene Schutzobjekte hinsichtlich eines Differentialschutzes überwachen zu können. Dasselbe kann für das zweite Gerät gelten.

Ein Schutzobjekt (Teil des elektrischen Netzwerkes) kann sich z.B. zwischen dem ersten Gerät und dem zweiten Gerät befinden. Insbesondere kann das erste Gerät an einem ersten Ende mit dem Schutzobjekt zur Strommessung elektrisch gekoppelt sein und das zweite Gerät kann an einem zweiten Ende mit dem Schutzobjekt zur Strommessung gekoppelt sein. Das Schutzobjekt kann z.B. eine elektrische Leitung, oder ein anderes Gerät umfassen. Das Schutzobjekt kann insbesondere verschieden sein von einem Gerät, welches einen Strom wandelt. Ein Stromwandelgerät erfüllt nicht die Kirchhoffsche Knotenpunktregel.

Gemäß der vorliegenden Erfindung ist das Verfahren derart ausgebildet, dass das Telegramm für jede Messung den Stromwert, den (Mess- oder Abtast-)Zeitpunkt und ein Validitätsbit aufweist, das anzeigt, ob Zeitsynchronisierung verfügbar war, wobei das Vergleichen des ersten Stromwertes mit einem zweiten Stromwert Prüfen aufweist, ob ein Validitätsbit sowohl für den ersten Stromwert als auch für den zweiten Stromwert vorhanden ist.

Ist das Validitätsbit nicht vorhanden, so kann der entsprechende Messwert verworfen werden. Wenn z.B. von der Masteruhr für relativ lange Zeit kein Zeitsignal zur Synchronisation an das erste Gerät oder an das zweite Gerät versendet worden ist, kann die durch die lokale Uhr angezeigte Zeit nicht mehr der Zeit gemäß der Masteruhr entsprechen. Aus diesem Grunde kann nach einer Schwellwertzeit, über die kein Synchronisationszeitsignal von der Masteruhr erhalten worden ist, die Zeitsynchronisierung unzureichend sein, weswegen das Validitätsbit nicht mehr gesetzt wird. In einem solchen Fall kann z.B. das betreffende Gerät ein weiteres Zeitsynchronisationssignal von der Masteruhr anfordern.

Das Validitätsbit kann kennzeichnen, ob die hochgenaue Zeitsynchronisierung zum Zeitpunkt der Stempelung verfügbar war. Der Zeitstempel kann fest mit dem gestempelten Messwert verknüpft sein und kann auch während der späteren Verarbeitungsprozesse nicht mehr verändert werden bzw. braucht nicht verändert werden. Zusätzlich können alle zu übertragenden Binärwerte ebenfalls mit dem Zeitstempel ihrer Erzeugung verknüpft werden. Das kann auch für geräteinterne Übertragung zwischen einzelnen Funktionen gelten. Damit können auch Gegenmaßnahmen im Falle eines Fehlerfalles zuverlässiger und wirkungsvoller durchgeführt werden.

Gemäß einer Ausführungsform der vorliegenden Erfindung weist das Verfahren auf: Versehen eines zwischen dem ersten Gerät und dem zweiten Gerät auszutauschenden Datenübertragungspaketes mit einem Absendezeitpunkt gemäß der Masteruhr; Bestimmen von Empfangszeitpunkt des Datenübertragungspaketen bei Empfang gemäß der Masteruhr; Bestimmen von Laufzeit des Datenübertragungspaketes aus Absendezeitpunkt und Empfangszeitpunkt. Die bestimmte Laufzeit kann für andere Zwecke, z.B. Synchronisierung, später genutzt werden.

Gemäß einer Ausführungsform der vorliegenden Erfindung umfasst das Vergleichen des ersten Stromwertes mit dem zweiten Stromwert eine Anwendung des Kirchhoffschen Knotenpunktsatzes, wobei das Verfahren ferner Anzeigen eines Fehlerfalls basierend auf dem Vergleichen aufweist.

Der Kirchhoffsche Knotenpunktsatz erfordert, dass alle Ströme zu einem exakt gleichen Zeitpunkt gemessen worden sind. Aufgrund der hochgenauen Synchronisierung kann dies sichergestellt werden, wodurch das Verfahren an Zuverlässigkeit gewinnen kann.

Der Fehlerfall kann anzeigen, dass das Schutzobjekt fehlerhaft ist. Darauffolgend können Maßnahmen ergriffen werden, um die Auswirkungen des fehlerhaften Schutzobjektes auf das restliche elektrische Netzwerk gering zu halten. Zum Beispiel kann das Schutzobjekt von dem übrigen elektrischen Netzwerk elektrisch abgetrennt werden. Dies kann z.B. durch das zweite Gerät und/oder das erste Gerät bzw. beide Geräte erreicht werden, indem diese Geräte entsprechende Schalter öffnen, welche an einem Ende bzw. an einem anderen Ende mit dem Schutzobjekt verbunden sind.

Gemäß einer Ausführungsform der vorliegenden Erfindung ist das elektrische Netzwerk ein elektrisches Energieversorgungsnetzwerk im Mittel-, Hoch- oder Höchstspannungsbereich z.B. zwischen 100 kV und 400 kV oder zwischen 10 kV und 50 kV. Damit kann ein Differentialschutz für wichtige elektrische Netzwerke bereitgestellt werden.

Gemäß einer Ausführungsform der vorliegenden Erfindung weist das erste Gerät und/oder das zweite Gerät ein Schutzgerät oder eine Merging Unit auf. Eine Merging Unit kann die Messungen der Rohdaten vornehmen und kann auch eine Digitalisierung, d.h. eine Abtastung der Analogwerte vornehmen. Die Merging Unit kann die digitalen Messwerte an das Schutzgerät übermitteln.

Gemäß einer Ausführungsform der vorliegenden Erfindung umfasst das erste Gerät sowohl Messausrüstung als auch Abtastausrüstung als auch einen Speicher und Auswerteausrüstung zur Auswertung von Messdaten. Das erste Gerät kann somit die Funktionalität einer Merging Unit und die Funktionalität eines Schutzgerätes umfassen. Ein herkömmliches Schutzgerät kann ausgebildet sein, einen Schalter anzusteuern, um z.B. ein Schutzobjekt an einer Seite bzw. an einem Ende von dem restlichen elektrischen Netzwerk abzutrennen. Damit werden herkömmlich verfügbare Geräte unterstützt.

Gemäß einer Ausführungsform der vorliegenden Erfindung ist das Verfahren derart ausgebildet, dass die erste Stelle und die zweite Stelle über eine elektrische Leitung verbunden sind, wobei die erste Stelle und die zweite Stelle zusammen mit der Leitung zwischen einem ersten Stromwandler und einem zweiten Stromwandler verbunden sind, wobei der Stromwandler eines der folgenden aufweist einen Transformator, einen Konverter.

Die elektrische Leitung zwischen der ersten Stelle und der zweiten Stelle kann das Schutzobjekt bilden oder darstellen. Insbesondere kann das Schutzobjekt zwischen zwei Stromwandlern liegen. Nur Schutzobjekte, die keinen nichtdeterministischen Stromwandler aufweisen, können durch Anwendung des Kirchhoffschen Knotenpunktsatzes hinsichtlich eines Differentialschutzes überwacht werden. Beispiele für Schutzobjekte sind Schutzleitungen, Leistungstransformatoren, Motoren, Generatoren, Sammelschienen.

Gemäß einer Ausführungsform der vorliegenden Erfindung ist zwischen der ersten Stelle und dem ersten Stromwandler ein erster Schalter angeordnet, wobei das erste Gerät ausgebildet ist, im Fehlerfall den ersten Schalter zu öffnen. Damit kann an einer Seite das Schutzobjekt von dem elektrischen Netzwerk getrennt werden. Ferner kann zwischen der zweiten Stelle und dem zweiten Stromwandler ein zweiter Schalter angeordnet sein, wobei das zweite Gerät ausgebildet ist, im Fehlerfall den zweiten Schalter zu öffnen. Damit kann das Schutzobjekt vollständig von dem übrigen elektrischen Netzwerk elektrisch getrennt werden.

Es sollte verstanden werden, dass Merkmale, welche individuell oder in irgendeiner Kombination für ein Verfahren eines Überwachens eines elektrischen Netzwerkes zum Differentialschutz bereitgestellt, beschrieben oder erläutert worden sind, ebenso, individuell oder in irgendeiner Kombination auf ein System zum Überwachen eines elektrischen Netzwerkes anwendbar sind, gemäß Ausführungsformen der vorliegenden Erfindung, und umgekehrt.

Gemäß einer Ausführungsform der vorliegenden Erfindung ist ein System zum Überwachen eines elektrischen Netzwerkes, insbesondere Mittel- oder Hochspannungsnetzwerk, zum Differentialschutz bereitgestellt, wobei das System aufweist: ein erstes Gerät, das ausgebildet ist, zu einem gemäß einer Masteruhr bestimmten ersten Zeitpunkt einen ersten Stromwertes an einer ersten Stelle im Netzwerk zu messen und den ersten Stromwert dem ersten Zeitpunkt zuzuordnen; ein zweites Gerät, das ausgebildet ist: den ersten Stromwert und den zugeordneten ersten Zeitpunkt zu erhalten; und den ersten Stromwert mit einem zweiten Stromwert zu vergleichen, der an einer zweiten Stelle im Netzwerk gemessen wurde und dem ersten Zeitpunkt gemäß der Masteruhr zugeordnet ist.

### Kurze Beschreibung der Figuren

Fig. 1 illustriert schematisch ein System zum Überwachen eines elektrischen Netzwerkes zum Differentialschutz gemäß einer Ausführungsform der vorliegenden Erfindung.
Fig. 2 illustriert schematisch jeweilige Speicher von verschiedenen Geräten des Überwachungssystems.

### Detaillierte Beschreibung von Ausführungsformen

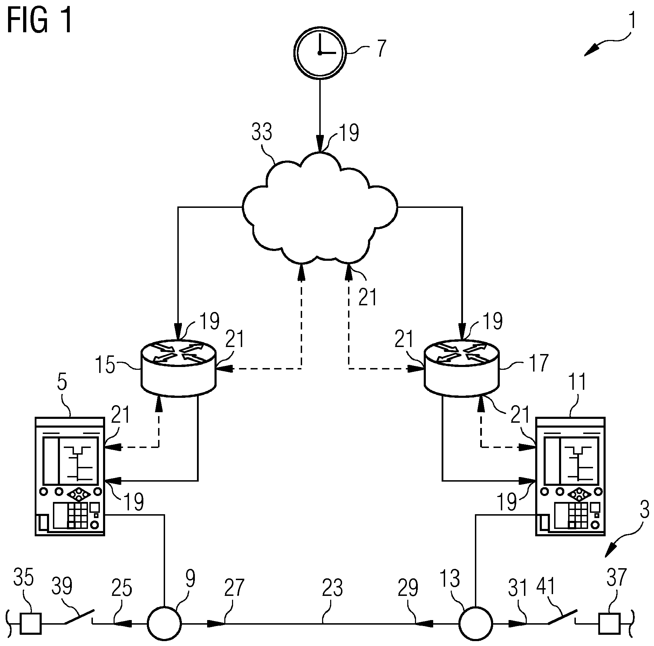

Das in der Fig. 1 schematisch illustrierte System 1 zum Überwachen eines elektrischen Netzwerkes 3 zum Differentialschutz gemäß einer Ausführungsform der vorliegenden Erfindung ist ausgebildet, ein Verfahren eines Überwachens eines elektrischen Netzwerkes 3 zum Differentialschutz gemäß einer Ausführungsform der vorliegenden Erfindung auszuführen.

Das System 1 weist ein erstes Gerät 5 auf, das ausgebildet ist, zu einem gemäß einer Masteruhr 7 bestimmten ersten Zeitpunkt einen ersten Stromwert 25, 27 an einer Stelle 9 im Netzwerk 3 zu messen und den ersten Stromwert dem ersten Zeitpunkt zuzuordnen. Das System 1 weist ferner ein zweites Gerät 11 auf, das ausgebildet ist, den ersten Stromwert und den zugeordneten ersten Zeitpunkt von dem ersten Gerät zu erhalten und den ersten Stromwert mit einem zweiten Stromwert 29, 31 zu vergleichen, welcher an einer zweiten Stelle 13 im Netzwerk 3 gemessen wurde und dem ersten Zeitpunkt gemäß der Masteruhr 7 zugeordnet ist.

Das Netzwerk 3 kann z.B. ein elektrisches Energieversorgungs-Netzwerk sein, wovon nur ein Ausschnitt in der Figur 1 illustriert ist. Das System weist neben dem ersten Gerät 5, dem zweiten Gerät 11 und der Masteruhr 7 auch ein Verbindungsgerät 15 (z.B. Edgerouter mit Boundary Clock) sowie ein weiteres Verbindungsgerät 17 auf, die jeweils mit dem ersten Gerät 5 bzw. dem zweiten Gerät 11 zur Zeitsynchronisierung zum Austausch von Synchronisierungsdaten 19 (gemäß einem Zeitsynchronisierungsprotokoll) bzw. zur Differentialschutzkommunikation zum Austauschen von Messdaten 21 verbunden sind. Die Zeitsynchronisierungsdaten 19 sind in der Figur 1 durch durchgezogene Linien gekennzeichnet, die Messdaten 21 zur Differentialschutzkommunikation sind durch gestrichelte Linien 21 illustriert.

Ein Verfahren eines Überwachens des elektrischen Netzwerkes 3 umfasst auch ein Synchronisieren des ersten Geräts 5 und des zweiten Geräts 11 über die Synchronisationsdaten 19 von der Masteruhr 7, wobei die Synchronisationsdaten 19 insbesondere ein Zeitsignal umfassen, das insbesondere über ein elektrisches oder optisches Kabel von der Masteruhr 7 an das erste Gerät 5 bzw. das zweite Gerät 11 übermittelt wird. Dazu sind zur Übertragung der Zeitsynchronisierungsdaten 19 elektrische oder optische Verbindungskabel vorgesehen. In anderen Ausführungsformen kann auch eine drahtlose Übertragung vorgesehen sein. Das erste Gerät 5 und das zweite Gerät 11 erhalten jedoch keine Synchronisierungssignale von einem GPS-Satelliten.

Das erste Gerät 5 ist ausgebildet, insbesondere einen Strom 25, 27 zu messen, der durch die Stelle 9 fließt und aus der Leitung 23, welche die erste Stelle 9 mit der zweiten Stelle 13 verbindet, herausfließt bzw. in die Leitung 23 hineinfließt. Das zweite Gerät 11 ist in analoger Weise in der Lage, einen Strom 29, welcher in die elektrische Leitung 23 hineinfließt bzw. ein Strom 31, welcher aus der elektrischen Leitung 23 herausfließt, zu messen.

Das zweite Gerät 11 erhält den ersten Stromwert (z.B. 25, 27) von dem ersten Gerät 5, wobei der erste Stromwert (z.B. 25, 27) einem ersten Zeitpunkt zugeordnet ist, der sich auf die Masteruhr 7 bezieht. Sowohl bei dem ersten Gerät 5 als auch bei dem zweiten Gerät 11 kann auch eine A/D-Wandlung von Analog-Roh-Messwerten erfolgen. Der erste Stromwert (z.B. 25, 27) wird dann von dem ersten Gerät 5 als digitale Signale 21 über einen Kommunikationsweg (z.B. drahtgebunden oder drahtlos) an das zweite Gerät 11 übertragen. Die Kommunikation erfolgt in einem hochgenau synchronisierten Kommunikationsnetzwerk 33, von dem das erste Gerät, das zweite Gerät 5, 11 sowie die Verbindungsgeräte 15, 17 Teil sind.

Die erste Stelle 9 und die zweite Stelle 13 sind über die elektrische Leitung 23 verbunden und die erste Stelle 9 und die zweite Stelle 13 sind zusammen mit der Leitung 23 zwischen einem ersten Stromwandler 35 und einem zweiten Stromwandler 37 verbunden. Zwischen der ersten Stelle 9 und dem ersten Stromwandler 35 ist ein erster Schalter 39 angeordnet und zwischen der zweiten Stelle 13 und dem zweiten Stromwandler 37 ist ein zweiter Schalter 41 verbunden bzw. angeordnet.

Eine Auswertung der Stromwerte (z.B. 27, 25, 29, 31), die an den beiden Stellen 9 und 13 gemessen wurden, kann in dem ersten Gerät 5 oder in dem zweiten Gerät 11 erfolgen. Ist z.B. die Summe der in die elektrische Leitung 23 fließenden Ströme (oder aus der elektrischen Leitung herausfließenden Ströme) bei der Stelle 9 nicht gleich der Summe der Ströme, welche bei der Stelle 13 aus der elektrischen Leitung herausfließen (bzw. in die elektrische Leitung hineinfließen) (z.B. Ströme 29, 31), so wird ein Fehlerfall angezeigt, welcher einen Fehler in der elektrischen Leitung 23 anzeigt. In diesem Fall kann das erste Gerät 5 den ersten Schalter 39 öffnen und auch das zweite Gerät 11 kann den zweiten Schalter 41 öffnen, um somit die elektrische Leitung 23 von dem Rest des elektrischen Netzwerkes 3 elektrisch zu trennen.

Gemäß Ausführungsformen der vorliegenden Erfindung werden alle seriellen Telegramme oder paketisierten Telegramme, welche zwischen den einzelnen Geräten (z.B. erstes Gerät 5 und zweites Gerät 11) ausgetauscht werden, z.B. zwischen Merging Unit und Schutzgerät oder den verschiedenen Enden einer Differentialschutztopologie, beim Senden und beim Empfangen mit hochgenauen Zeitstempeln versehen. Dadurch können Laufzeiten auch in nicht deterministischen Kommunikationsnetzwerken, wie z.B. MPLS-Netzen oder Ethernet-basierten Netzen ermittelt und überwacht werden.

Auf deterministischen Kommunikationswegen lassen sich dadurch die Laufzeiten in Sende- und Empfangsrichtung sehr genau bestimmen und damit Störungen und Schalthandlungen sehr genau ermitteln.

In nicht-deterministischen Kommunikationswegen lassen sich dadurch ebenfalls die Laufzeiten in Sende- und in Empfangsrichtung bestimmen und für Plausibilitätsprüfungen verwenden.

Um die für den Differentialschutz notwendigen Informationen verschiedener Enden zu verarbeiten (z.B. an der ersten Stelle 9 und der zweiten Stelle 13 an Enden der elektrischen Leitung 23), werden lokale Messwerte und empfangene Messwerte in einen synchronisierenden Speicher (Puffer) je Ende und Messwertkanal beschrieben. Sobald alle Messwerte eines Zeitstempels verfügbar sind, werden diese den Differentialschutz-Algorithmen zur weiteren Berechnung zur Verfügung gestellt.

Dadurch stehen den Differentialschutz-Algorithmen alle Stromwerte mit einer Genauigkeit von besser als Mikrosekunde zur Verfügung. Die Gesamtgenauigkeit wird dadurch nur noch durch die Stromwandler und die A/D-Wandlung beeinflusst.

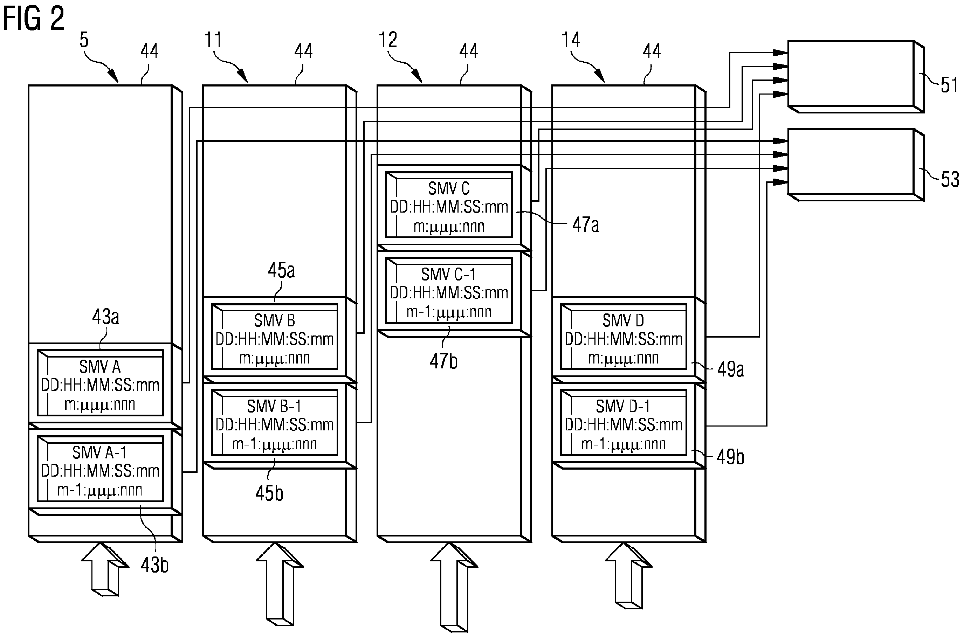

Fig. 2 illustriert schematisch jeweilige Speicher 44 von verschiedenen Geräten einschließlich des ersten Gerätes 5, des zweiten Gerätes 11, eines dritten Gerätes 12 und eines vierten Gerätes 14. In dem ersten Gerät 5 sind in dem Speicher 44 mehrere Einträge 43a, 43b gespeichert, welche jeweils einen Stromwert, einen Zeitstempel (Zeitpunkt der Strommessung, z.B. auf eine Nanosekunde genau) sowie ein Plausibilitätsbit enthalten. Ebenso sind in dem zweiten Gerät 11 mehrere Einträge 45a, 45b von Messwerten gespeichert was auch für das dritte Gerät 12 und das vierte Gerät 14 zutrifft. Die Einträge sind in Fig. 2 mit Bezugszeichen 43a, 43b, 45a, 45b, 47a, 47b bzw. 49a, 49b bezeichnet.

Der Speicher 44 des ersten Gerätes 5 speichert Messwerte, welche von dem ersten Gerät 5 aufgenommen wurden, insbesondere von der ersten Stelle 9. Der Speicher 44 des zweiten Gerätes 11 speichert Messwerte, die an der zweiten Stelle 13 von dem zweiten Gerät 11 aufgenommen wurden.

Zur Differenzberechnung (Block 51 bzw. 53) werden die jeweiligen Messwerte, die demselben Zeitpunkt zugeordnet sind, miteinander verglichen, d.h. die Einträge 43a, 45a, 47a, 49a werden herangezogen, um die Stromdifferenzberechnung für einen ersten Zeitpunkt durchzuführen. Analog werden die Einträge 43b, 45b, 47b, 49b herangezogen, um Stromdifferenzberechnungen für einen zweiten Zeitpunkt durchzuführen (siehe Block 53) .

Eine Stabilisierung gegen Fehlsynchronisation kann bei einer Umschaltung von einer Masteruhr auf eine andere Masteruhr notwendig werden. Ist ein Validitätsbit, das eine korrekte Synchronisierung anzeigt, auf "ungültig" gesetzt, so können die Messwerte mit entsprechenden Zeitstempeln verworfen werden und der Differentialschutz vorübergehend blockiert werden.

Die Zeitstempelung der Messwerte und der Telegramme ermöglicht auch die Umstellung der Telegramm-Sendeverfahren von Ketten- und Ring-Topologie auf Multicast-Verfahren.

Durch den Multicast-Ansatz lässt sich die Gesamtübertragungsdauer bei Mehrenden-Topologien deutlich erzielen, da alle Informationen nach nur einem Umlauf zur Verfügung stehen. Dies reduziert zum einen die Auslösezeiten, zum anderen stellt die Basis der Mehrendfähigkeit auf mehr als 6 Enden zu erhöhen. Die Differentialschutzkommunikation 21 kann somit auch im Multicast-Verfahren durchgeführt werden.

## Patentansprüche

1. Verfahren eines Überwachens eines elektrischen Netzwerkes (3), insbesondere Mittel- oder Hochspannungsnetzwerk, zum Differentialschutz, wobei das Verfahren aufweist:
Messen, zu einem gemäß einer Masteruhr (7) bestimmten ersten Zeitpunkt, eines ersten Stromwertes (25, 27) mittels eines ersten Gerätes (5) an einer ersten Stelle (9) im Netzwerk (3) und Zuordnen des ersten Zeitpunkts;
Erhalten, bei einem zweiten Gerät (11), des ersten Stromwertes (25, 27) und des zugeordneten ersten Zeitpunktes; und
Vergleichen des ersten Stromwertes (25, 27) mit einem zweiten Stromwert (29, 31), der an einer zweiten Stelle (13) im Netzwerk (3) gemessen wurde und dem ersten Zeitpunkt gemäß der Masteruhr (7) zugeordnet ist, wobei das Erhalten, bei dem zweiten Gerät (11), des ersten Stromwertes (25, 27) und des zugeordneten ersten Zeitpunktes aufweist:
Versenden des ersten Stromwertes (25, 27) und des zugeordneten ersten Zeitpunktes in einem Telegramm, das weitere erste Stromwerte und zugeordnete weitere erste Zeitpunkte aufweist, von dem ersten Gerät an das zweite Gerät, insbesondere über eine elektrische Kabelverbindung eines Kommunikationsnetzes zwischen dem ersten Gerät und dem zweiten Gerät,**da durch gekennzeichnet**, dass
das Telegramm für jede Messung den Stromwert, den Zeitpunkt und ein Validitätsbit aufweist, das anzeigt, ob Zeitsynchronisierung verfügbar war,
wobei das Vergleichen des ersten Stromwertes mit einem zweiten Stromwert aufweist:
Prüfen, ob ein Validitätsbit sowohl für den ersten Stromwert als auch für den zweiten Stromwert vorhanden ist.

2. Verfahren gemäß dem vorangehenden Anspruch, ferner aufweisend:
vorheriges Synchronisieren, insbesondere mittels Anwendens von IEEE1588 oder SyncE, des ersten Gerätes (5) und des zweiten Gerätes (11) mittels Empfangens mindestens eines Zeitsignals (19) von der Masteruhr (7), insbesondere über ein elektrisches Kabel eines Kommunikationsnetzwerkes (33), wobei eine erste Laufzeit zwischen der Masteruhr (7) und dem ersten Gerät (5) und eine zweite Laufzeit zwischen der Masteruhr und dem zweiten Gerät (11) berücksichtigt werden.

3. Verfahren gemäß dem vorangehenden Anspruch,
wobei eine Übertragung des Zeitsignals (19) von der Masteruhr (7) zu dem ersten Gerät (5) über eine erste elektrische oder optische Kabelverbindung erfolgt, die die erste Laufzeit definiert, wobei eine Länge der ersten Kabelverbindung zwischen 1 km und 5000 km beträgt,
wobei eine Übertragung des Zeitsignals (19) von der Masteruhr (7) zu dem zweiten Gerät (11) über eine zweite elektrische oder optische Kabelverbindung erfolgt, die die zweite Laufzeit definiert, wobei eine Länge der zweiten Kabelverbindung zwischen 1 km und 5000 km beträgt.

4. Verfahren gemäß einem der vorangehenden Ansprüche 2 oder 3, wobei das Synchronisieren wiederholt durchgeführt wird und/oder
wobei das Synchronisieren mit einer Genauigkeit von 100 ns bis 1 us erfolgt.

5. Verfahren gemäß einem der vorangehenden Ansprüche, ferner aufweisend:
Messen, mittels des zweiten Gerätes (11), bei der zweiten Stelle (13) im Netzwerk, mehrerer zweiter Stromwerte (29, 31) zu mehreren gemäß der Masteruhr bestimmten zweiten Zeitpunkten;
Speichern, zugeordnet zu den jeweiligen mehreren zweiten Zeitpunkten, der mehreren zweiten Stromwerte (29, 31, 45a, 45b) in einem Speicher (44) des zweiten Gerätes (11).

6. Verfahren gemäß dem vorangehenden Anspruch, ferner aufweisend:
Auffinden des zweiten Stromwertes (29, 31), indem aus dem Speicher aus den mehreren zweiten Stromwerten (45a, 45b) derjenige herausgesucht wird, dessen zugeordneter zweiter Zeitpunkt dem ersten Zeitpunkt am nächsten liegt.

7. Verfahren gemäß einem der vorangehenden Ansprüche 5 oder 6, ferner aufweisend:
Löschen des zweiten Stromwerts (45a) zugeordnet zu dem ersten Zeitpunkt aus dem Speicher (44) des zweiten Gerätes (11) nach dem Vergleichen des ersten Stromwertes (25, 27) mit einem zweiten Stromwert (29, 31, 45a).

8. Verfahren gemäß einem der vorangehenden Ansprüche,
wobei das Messen der ersten Stromwertes (25, 27) und/oder des zweiten Stromwertes (29, 31) und/oder der mehreren zweiten Stromwerte eine A/D-Wandlung von Analog-Rohmesswerten umfasst, wobei A/D-Wandlungen bei dem ersten Gerät (5) und dem zweiten Gerät (11) mittels der Masteruhr (7) synchronisiert sind.

9. Verfahren gemäß dem vorangehenden Anspruch,
wobei ein Abtasten für die A/D Wandlung bei einer Frequenz zwischen 1 kHz und 1 MHz durchgeführt wird.

10. Verfahren gemäß einem der vorangehenden Ansprüche, ferner aufweisend:
Versehen eines zwischen dem ersten Gerät (5) und dem zweiten Gerät (11) auszutauschenden Datenübertragungspaketes mit einem Absendezeitpunkt gemäß der Masteruhr (7);
Bestimmen von Empfangszeitpunkt des Datenübertragungspaketen bei Empfang gemäß der Masteruhr;
Bestimmen von Laufzeit des Datenübertragungspaketes aus Absendezeitpunkt und Empfangszeitpunkt.

11. Verfahren gemäß einem der vorangehenden Ansprüche,
wobei das Vergleichen des ersten Stromwertes (25, 27) mit einem zweiten Stromwert (29, 31) eine Anwendung des Kirchhoffschen Knotenpunktsatzes umfasst,
wobei das Verfahren ferner aufweist:
Anzeigen eines Fehlerfalls basierend auf dem Vergleichen.

12. Verfahren gemäß einem der vorangehenden Ansprüche,
wobei das elektrische Netzwerk (3) ein elektrisches Energieversorgungsnetzwerk im Mittel-, Hoch- oder Höchstspannungsbereich aufweist.

13. Verfahren gemäß einem der vorangehenden Ansprüche, wobei das erste Gerät (5) und/oder das zweite Gerät (11) ein Schutzgerät oder eine Merging-Unit aufweist.

14. Verfahren gemäß einem der vorangehenden Ansprüche, wobei die erste Stelle (9) und die zweite Stelle (13) über eine elektrische Leitung (23) verbunden sind, wobei die erste Stelle (9) und die zweite Stelle (13) zusammen mit der Leitung (23) zwischen einem ersten Stromwandler (35) und einem zweiten Stromwandler (37) verbunden sind,
wobei der erste und/oder der zweite Stromwandler (35, 37) eines der folgenden aufweist:
einen Transformator;
einen Konverter.

15. Verfahren gemäß dem vorangehenden Anspruch,
wobei zwischen der ersten Stelle (9) und dem ersten Stromwandler (35) ein erster Schalter (39) angeordnet ist, wobei das erste Gerät (5) ausgebildet ist, im Fehlerfall den ersten Schalter (39) zu öffnen.

16. System (1) zum Überwachen eines elektrischen Netzwerkes (3), insbesondere Mittel-, Hoch- oder Höchstspannungsnetzwerk, zum Differentialschutz, wobei das System aufweist:
ein erstes Gerät (5), das ausgebildet ist, zu einem gemäß einer Masteruhr (7) bestimmten ersten Zeitpunkt, einen ersten Stromwert (25, 27) an einer ersten Stelle (9) im Netzwerk (3) zu messen und den ersten Stromwert (25, 27) dem ersten Zeitpunkt zuzuordnen;
ein zweites Gerät (11), das ausgebildet ist:
den ersten Stromwert (25, 27) und den zugeordneten ersten Zeitpunkt zu erhalten; und
den ersten Stromwert (25, 27) mit einem zweiten Stromwert (29, 31) zu vergleichen, der an einer zweiten Stelle (13) im Netzwerk gemessen wurde und dem ersten Zeitpunkt gemäß der Masteruhr (7) zugeordnet ist, wobei das Erhalten, bei dem zweiten Gerät (11), des ersten Stromwertes (25, 27) und des zugeordneten ersten Zeitpunktes aufweist:
Versenden des ersten Stromwertes (25, 27) und des zugeordneten ersten Zeitpunktes in einem Telegramm, das weitere erste Stromwerte und zugeordnete weitere erste Zeitpunkte aufweist, von dem ersten Gerät an das zweite Gerät, insbesondere über eine elektrische Kabelverbindung eines Kommunikationsnetzes zwischen dem ersten Gerät und dem zweiten Gerät,
**dadurch gekennzeichnet, dass**
das Telegramm für jede Messung den Stromwert, den Zeitpunkt und ein Validitätsbit aufweist, das anzeigt, ob Zeitsynchronisierung verfügbar war,
wobei das Vergleichen des ersten Stromwertes mit einem zweiten Stromwert aufweist:
Prüfen, ob ein Validitätsbit sowohl für den ersten Stromwert als auch für den zweiten Stromwert vorhanden ist.

## Claims

1. Method of monitoring an electrical network (3), in particular a medium- or high-voltage network, for differential protection, the method comprising:
measuring, at a first point in time determined according to a master clock (7), a first current value (25, 27) by means of a first device (5) at a first location (9) in the network (3) and assigning the first point in time;
obtaining, at a second device (11), the first current value (25, 27) and the assigned first point in time; and
comparing the first current value (25, 27) with a second current value (29, 31), which was measured at a second location (13) in the network (3) and has been assigned to the first point in time according to the master clock (7), the obtaining, at the second device (11), of the first current value (25, 27) and the assigned first point in time comprising:
sending the first current value (25, 27) and the assigned first point in time in a telegram, which has further first current values and assigned further first points in time, from the first device to the second device, in particular by way of an electrical cable connection of a communication network between the first device and the second device, **characterized in that**
for each measurement, the telegram comprises the current value, the point in time and a validity bit, which indicates whether time synchronization was available,
the comparing of the first current value with a second current value comprising:
checking whether there is a validity bit both for the first current value and for the second current value.

2. Method according to the preceding claim, also comprising:
previously synchronizing, in particular by means of applying IEEE1588 or SyncE, the first device (5) and the second device (11) by means of receiving at least one time signal (19) from the master clock (7), in particular by way of an electrical cable of a communication network (33), taking into account a first transit time between the master clock (7) and the first device (5) and a second transit time between the master clock and the second device (11).

3. Method according to the preceding claim,
a transmission of the time signal (19) from the master clock (7) to the first device (5) taking place by way of a first electrical or optical cable connection, which defines the first transit time, a length of the first cable connection being between 1 km and 5000 km,
a transmission of the time signal (19) from the master clock (7) to the second device (11) taking place by way of a second electrical or optical cable connection, which defines the second transit time, a length of the second cable connection being between 1 km and 5000 km.

4. Method according to one of the preceding Claims 2 or 3, the synchronizing being carried out repeatedly and/or
the synchronizing taking place with an accuracy of 100 ns to 1 ps.

5. Method according to one of the preceding claims, also comprising:
measuring, by means of the second device (11) at the second location (13) in the network, multiple second current values (29, 31) at multiple second points in time determined according to the master clock;
storing, assigned to the respective multiple second points in time, the multiple second current values (29, 31, 45a, 45b) in a memory (44) of the second device (11).

6. Method according to the preceding claim, also comprising:
finding the second current value (29, 31) by picking out from the multiple second current values (45a, 45b) in the memory the one for which the assigned second point in time lies closest to the first point in time.

7. Method according to one of the preceding Claims 5 or 6, also comprising:
erasing the second current value (45a) assigned to the first point in time from the memory (44) of the second device (11) after the comparing of the first current value (25, 27) with a second current value (29, 31, 45a).

8. Method according to one of the preceding claims,
the measuring of the first current value (25, 27) and/or the second current value (29, 31) and/or the multiple second current values comprising an A/D conversion of analogue raw measured values, A/D conversions at the first device (5) and the second device (11) being synchronized by means of the master clock (7).

9. Method according to the preceding claim,
a sampling for the A/D conversion being carried out at a frequency between 1 kHz and 1 MHz.

10. Method according to one of the preceding claims, also comprising:
providing a data transmission package, to be exchanged between the first device (5) and the second device (11), with a sending point in time according to the master clock (7);
determining the receiving point in time of the data transmission package on receipt according to the master clock;
determining the transit time of the data transmission package from the sending point in time and the receiving point in time.

11. Method according to one of the preceding claims,
the comparing of the first current value (25, 27) with a second current value (29, 31) comprising application of Kirchhoff's point rule,
the method also comprising:
indicating if there is a fault on the basis of the comparison.

12. Method according to one of the preceding claims,
the electrical network (3) comprising an electrical power supply network in the medium- high- or ultrahigh-voltage range.

13. Method according to one of the preceding claims, the first device (5) and/or the second device (11) comprising a protective device or a merging unit.

14. Method according to one of the preceding claims, the first location (9) and the second location (13) being connected by way of an electrical line (23), the first location (9) and the second location (13) together with the line (23) being connected between a first current transformer (35) and a second current transformer (37),
the first and/or second current transformers (35, 37) comprising one of the following:
a transformer;
a converter.

15. Method according to the preceding claim,
a first switch (39) being arranged between the first location (9) and the first current transformer (35), the first device (5) being designed to open the first switch (39) if there is a fault.

16. System (1) for monitoring an electrical network (3), in particular a medium-, high- or ultrahigh-voltage network, for differential protection, the system comprising:
a first device (5), which is designed to measure, at a first point in time determined according to a master clock (7), a first current value (25, 27) at a first location (9) in the network (3) and to assign the first current value (25, 27) to the first point in time;
a second device (11), which is designed:
to obtain the first current value (25, 27) and the assigned first point in time; and
to compare the first current value (25, 27) with a second current value (29, 31), which was measured at a second location (13) in the network and has been assigned to the first point in time according to the master clock (7), the obtaining, at the second device (11), of the first current value (25, 27) and the assigned first point in time comprising:
sending the first current value (25, 27) and the assigned first point in time in a telegram, which has further first current values and assigned further first points in time, from the first device to the second device, in particular by way of an electrical cable connection of a communication network between the first device and the second device, **characterized in that**
for each measurement, the telegram comprises the current value, the point in time and a validity bit, which indicates whether time synchronization was available,
the comparing of the first current value with a second current value comprising:
checking whether there is a validity bit both for the first current value and for the second current value.

## Revendications

1. Procédé de contrôle d'un réseau (3) électrique, notamment d'un réseau de moyenne ou de haute tension, pour la protection différentielle, dans lequel le procédé comporte :
la mesure, à un premier instant déterminé suivant une horloge (7) maître, d'une première valeur (25, 27) de courant, au moyen d'un premier appareil (5) en un premier endroit (9) du réseau (3) et l'association du premier instant ;
l'obtention, auprès d'un deuxième appareil (11), de la première valeur (25, 27) de courant et du premier instant associé ; et
la comparaison de la première valeur (25, 27) de courant à une deuxième valeur (29, 31) de courant, qui a été mesurée en un deuxième endroit (13) du réseau (3) et qui est associée au premier instant suivant l'horloge (7) maître, dans lequel l'obtention, auprès du deuxième appareil (11), de la première valeur (25, 27) de courant et du premier instant associé comporte :
l'envoi de la première valeur (25, 27) de courant et du premier instant associé dans un télégramme, qui a d'autres premières valeurs et d'autres premiers instants associés, par le premier appareil au deuxième appareil, en particulier par une liaison électrique par câble d'un réseau de communication entre le premier appareil et le deuxième appareil,
**caractérisé en ce que**
le télégramme a, pour chaque mesure, la valeur du courant, l'instant et un bit de validité, qui indique si une synchronisation dans le temps était disponible,
dans lequel la comparaison de la première valeur de courant à une deuxième valeur de courant comporte :
le contrôle du point de savoir si un bit de validité est présent tant pour la première valeur de courant qu'également pour la deuxième valeur de courant.

2. Procédé suivant la revendication précédente, comportant en outre :
la synchronisation préalable, en particulier au moyen d'une application de IEEE1588 ou SyncE, du premier appareil (5) et du deuxième appareil (11), au moyen de la réception d'au moins un signal (19) temporel de l'horloge (7) maître, en particulier par un câble électrique d'un réseau (33) de communication, dans lequel on prend en compte un premier temps de parcours entre l'horloge (7) maître et le premier appareil (5) et un deuxième temps de parcours entre l'horloge maître et le deuxième appareil (11).

3. Procédé suivant la revendication précédente,
dans lequel une transmission du signal (19) temporel a lieu de l'horloge (7) maître au premier appareil (5), par une première liaison par câble électrique ou optique, qui définit le premier temps de parcours, une longueur de la première liaison par câble étant comprise entre 1 km et 5000 km,
dans lequel une transmission du signal (19) temporel a lieu de l'horloge (7) maître au deuxième appareil (11), par une deuxième liaison par câble électrique ou optique, qui définit le deuxième temps de parcours, une longueur de la deuxième liaison par câble étant comprise entre 1 km et 5000 km.

4. Procédé suivant l'une des revendications 2 ou 3 précédentes,
dans lequel on effectue la synchronisation de manière répétée et/ou
dans lequel la synchronisation a lieu avec une précision allant de 100 ns jusqu'à 1 ps.

5. Procédé suivant l'une des revendications précédentes, comportant en outre :
la mesure, au moyen du deuxième appareil (11) au deuxième endroit (13) du réseau, de plusieurs deuxièmes valeurs (29, 31) de courant à plusieurs deuxièmes instants déterminés conformément à l'horloge maître ;
la mise en mémoire, associée aux plusieurs deuxièmes instants respectifs, des plusieurs deuxièmes valeurs (29, 31, 45a, 45b) de courant dans une mémoire (44) du deuxième appareil (11).

6. Procédé suivant la revendication précédente, comportant en outre :
trouver la deuxième valeur (29, 31) de courant en recherchant dans la mémoire parmi les plusieurs deuxièmes valeurs (45a, 45b) de courant, celle dont le deuxième instant associé est le plus proche du premier instant.

7. Procédé suivant la revendication 5 ou 6 précédente, comportant en outre :
effacer la deuxième valeur (45a) de courant associée au premier instant de la mémoire (44) du deuxième appareil (11), après la comparaison de la première valeur (25, 27) de courant à une deuxième valeur (29, 31, 45a) de courant.

8. Procédé suivant l'une des revendications précédentes,
dans lequel la mesure de la première valeur (25, 27) de courant et/ou de la deuxième valeur (29, 31) de courant et/ou des plusieurs deuxièmes valeurs de courant comprend une transformation analogique à numérique de valeurs de mesure brutes analogiques, dans lequel des transformations analogiques à numériques, dans le premier appareil (5) et le deuxième appareil (11) sont synchronisées au moyen de l'horloge (7) maître.

9. Procédé suivant la revendication précédente,
dans lequel on effectue un échantillonnage pour la transformation analogique à numérique à une fréquence comprise entre 1 kHz et 1 MHz.

10. Procédé suivant l'une des revendications précédentes, comportant en outre :
munir un paquet de transmission de données s'échangeant entre le premier appareil (5) et le deuxième appareil (11) d'un instant d'émission conformément à l'horloge (7) maître ;
déterminer l'instant de réception du paquet de transmission de données à la réception conformément à l'horloge maître ;
déterminer le temps de parcours du paquet de transmission de données à partir de l'instant d'émission et de l'instant de réception.

11. Procédé suivant l'une des revendications précédentes,
dans lequel la comparaison de la première valeur (25, 27) de courant à une deuxième valeur (29, 31) de courant comprend une application de l'ensemble de nœuds de Kirchhoff,
dans lequel le procédé comprend en outre :
afficher un cas de défaut sur la base de la comparaison.

12. Procédé suivant l'une des revendications précédentes,
dans lequel le réseau (3) électrique est un réseau d'alimentation en énergie électrique dans le domaine de la moyenne, de la haute ou de la très haute tension.

13. Procédé suivant l'une des revendications précédentes, dans lequel le premier appareil (5) et/ou le deuxième appareil (11) a un appareil de protection ou une merging-unit.

14. Procédé suivant l'une des revendications précédentes, dans lequel le premier endroit (9) et le deuxième endroit (13) sont reliés par une ligne (23) électrique, dans lequel le premier endroit (9) et le deuxième endroit (13) sont reliés ensemble avec la ligne (23) entre un premier transformateur (35) de courant et un deuxième transformateur (37) de courant,
dans lequel le premier et/ou le deuxième transformateur (35, 37) de courant comporte l'un des suivants :
un transformateur ;
un convertisseur.

15. Procédé suivant la revendication précédente,
dans lequel un premier interrupteur (39) est monté entre le premier endroit (9) et le premier transformateur (35) de courant, le premier appareil (5) étant constitué pour ouvrir le premier interrupteur (39) en cas de défaut.

16. Système (1) de contrôle d'un réseau (3) électrique, notamment d'un réseau de moyenne, haute ou très haute tension, pour la protection différentielle, dans lequel le système comporte :
un premier appareil (5), qui est constitué pour mesurer à un premier instant déterminé, conformément à une horloge (7) maître, une première valeur (25, 27) de courant en un premier endroit (9) du réseau (3) et pour associer la première valeur (25, 27) de courant au premier instant ;
un deuxième appareil (11), qui est constitué :
pour obtenir la première valeur (25, 27) de courant et le premier instant associé ; et
pour comparer la première valeur (25, 27) de courant à une deuxième valeur (29, 31) de courant, qui a été mesurée à un deuxième endroit (13) du réseau et qui est associée au premier instant conformément à l'horloge (7) maître, dans lequel l'obtention, auprès du deuxième appareil (11), de la première valeur (25, 27) de courant et du premier instant associé comporte :
l'envoi de la première valeur (25, 27) de courant et du premier instant associé dans un télégramme, qui a d'autres premières valeurs et d'autres premiers instants associés, par le premier appareil au deuxième appareil, en particulier par une liaison électrique par câble d'un réseau de communication entre le premier appareil et le deuxième appareil,
**caractérisé en ce que**
le télégramme a, pour chaque mesure, la valeur du courant, l'instant et un bit de validité, qui indique si une synchronisation dans le temps était disponible,
dans lequel la comparaison de la première valeur de courant à une deuxième de courant comporte :
le contrôle du point de savoir si un bit de validité est présent tant pour la première valeur de courant qu'également pour la deuxième valeur de courant.
